# EUROPEAN PATENT APPLICATION

(11) **EP 0 993 062 A1**
(43) Date of publication of application: **12.04.2000**
(21) Application number: 98830582.7
(22) Date of filing: 30.09.1998
(51) Int. Cl.: H01M 10/52, F24F 7/02, B08B 15/00

(54) **Exhaust apparatus for gases evolved during charging of traction batteries**

(71) Applicant: Fabbrica Accumulatori Uranio S.p.a., 37121 Verona (IT)
(72) Inventor: Dal Sasso, Maurizio, 37042 Caldiero (Verona) (IT)
(74) Representative: Lanzoni, Luciano

(57) **Abstract**

The present invention relates to a gas disposal unit for charging power batteries arranged in a box-type container (4) provided with a closing lid (5). The disposal unit essentially comprises: a suction plant (2) provided with ventilation means (13) and with a plurality of connecting pipes (10) equipped with suction mouths (12), and connection devices (13) each associated with a connecting pipe (10) and designed to removably connect each mouth (12) to a corresponding through-hole (14) formed on the closing lid (5) of the box container (4) so as to allow suction of the gases produced inside the batteries (4) during charging thereof.

## Description

The present invention relates to a gas disposal unit for the charging of power batteries.

The unit in question is intended to be installed in premises used for the charging of power batteries, such as, in particular, batteries intended for electric transportation trucks such as fork-lift trucks or pallet transporters.

Below reference will be made to lead batteries of the "open" type, namely with a cover which allows the gases produced to escape freely.

As is known, during charging of these batteries, a particularly large quantity of hydrogen and oxygen is produced during the final stage of full charging and during continuation of charging beyond the gassification stage (overcharging). Therefore, the premises used for charging of the batteries may be affected by the presence of dangerously high quantities or concentrations of hydrogen, and preventive measures must therefore adopted in order to reduce the risk of explosions.

As is known, extensive regulations aimed at ensuring the safety of the premises used for charging exist, these relating in particular to the installation of electrical and electronic systems, the production of materials, equipment, machinery, etc.

With regard to ventilation of the premises, the regulations recommend that the area assigned for charging of the batteries should be well-ventilated, so as to ensure that the concentration of hydrogen in the atmosphere remains well below the lower limit where there is the risk of explosion.

In closed premises, natural ventilation, without the installation of special devices intended to facilitate the renewal of air, is not sufficient to ensure safety with a low concentration of hydrogen in the air. There exists moreover the real danger that there may be a build-up of hydrogen in any confined areas present underneath the roofs of buildings.

At present, in accordance with the known art, the safe charging of power batteries is performed either in open locations or in premises which are equipped with forced-ventilation plants which are large enough to ensure adequate air renewal, capable of preventing the build-up of hydrogen in the premises.

In practice, both these charging systems have some functional disadvantages.

The main drawback of battery charging in open areas obviously relates to the discomfort which may affect the operators when exposed to all types of weather conditions.

On the other hand, in the case where battery charging is performed in premises equipped with forced ventilation, the main drawback arises from the fact that, in compliance with the safety regulations, the area defined as being exposed to the risk of explosion, where it is not possible to provide most of the common types of mechanical, electrical and electronic installations, often comprise the zones where these installations are required.

For example, in the case of charging of batteries for electric trucks of the type commonly used in industrial warehouses, it is extremely convenient from a logistics and functional point of view to be able to allocate areas inside the warehouses themselves for charging of the batteries.

As mentioned, however, very often this is prevented by the resultant presence, nearby, of installations which do not comply with the standards because they are located in the vicinity of the battery charging zones.

The main object of the present invention is therefore that of overcoming the drawbacks and the operational limitations of the known art by providing a gas disposal unit which allows the charging of power batteries in closed premises, preventing the spread and build-up of hydrogen inside them and allowing charging to be performed safely substantially in the vicinity of any other type of installation, whether it be mechanical, electrical or electronic.

A further object is that of providing a gas disposal unit which is relatively simple from the constructional point of view and operationally entirely reliable.

These and other objects as well are all achieved by the unit in question which comprises: a suction plant provided with ventilation means and with a plurality of connecting pipes equipped with suction mouths; connection devices each of which designed to removably connect a suction mouth to a through-hole formed on the closing lid of a box containing a battery so as to allow suction of the gases produced inside the battery itself during charging thereof.

The technical characteristics of the invention, in accordance with the abovementioned objects, may be clearly understood from the contents of the claims indicated below and the advantages thereof will emerge more clearly from the detailed description which follows of a preferred embodiment illustrated, purely by way of a non-limiting example, in the accompanying drawings in which:
- Figure 1 shows schematically a side view of the gas disposal unit in question during charging of the battery of a fork-lift truck;
- Figure 2 shows schematically a perspective view of the suction plant associated with the disposal unit in question;
- Figure 3 shows schematically a side view of a constructional detail of the disposal unit according to Fig. 1, relating to device for effecting a connection between a battery and the suction plant;
- Figures 4 and 5 show, respectively, a side view and a top plan view of a first element of the connection device according to Fig. 3 associated with the suction plant;
- Figures 6 and 7 show, respectively, a side view and a top plan view of a second element of the connection device according to Fig. 3 associated with the battery;
- Figure 8 shows a battery provided with the connection device according to Fig. 3.

In accordance with the accompanying drawings, 1 denotes in its entirety a power battery and 2 a suction plant.

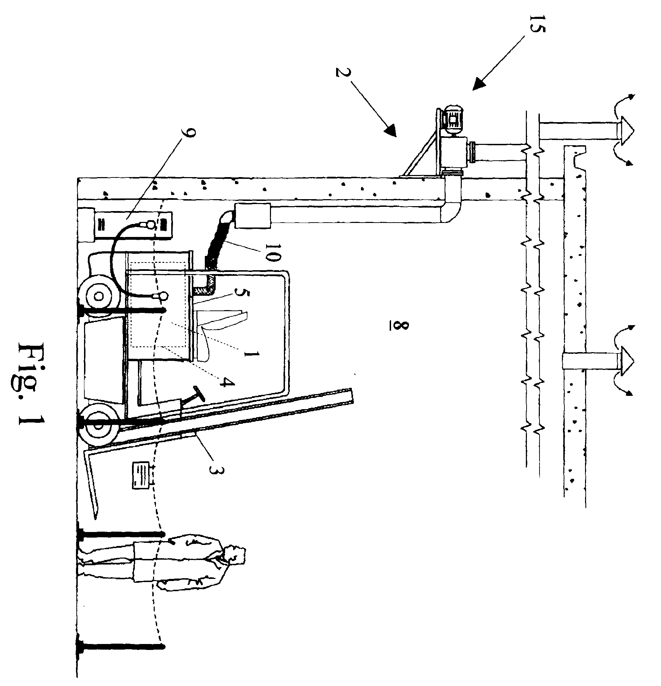

Below reference will be made to a power battery 1 of the type used on electric transportation trucks such as fork-lift trucks or pallet transporters which are referred to below in their entirety simply by the term "electric trucks". In the case of the example considered, as can be noted in Fig. 1, reference is made to an electric transportation truck 3 which is provided at the rear with the battery 1.

Commonly this type of battery 1 is provided with a box-type container 4 equipped, at the top, with a closing lid 5 generally forming an integral part of the bodywork of the electric truck 3 (see Fig. 1). The box container 4 with the battery 1 inside it is arranged in a compartment (not shown in the accompanying figures) formed in the top part of the electric truck 3.

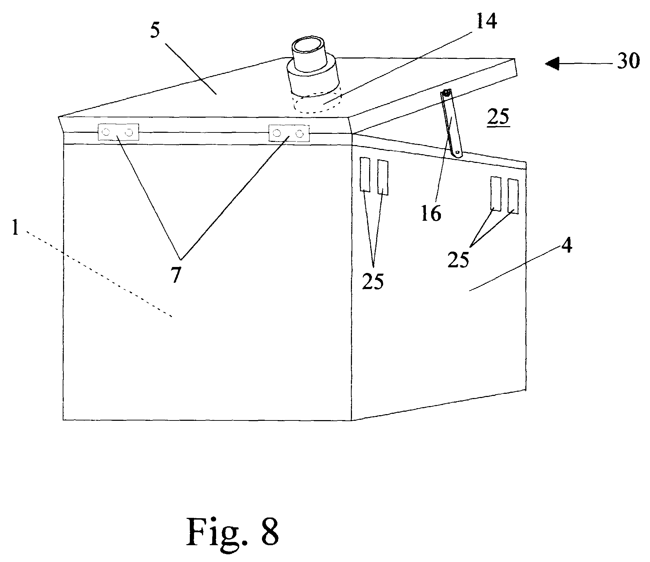

In a different manner, but less frequently, the closing lid 5 may be connected directly to the box container 4 by means of hinges 7 (see Fig. 8).

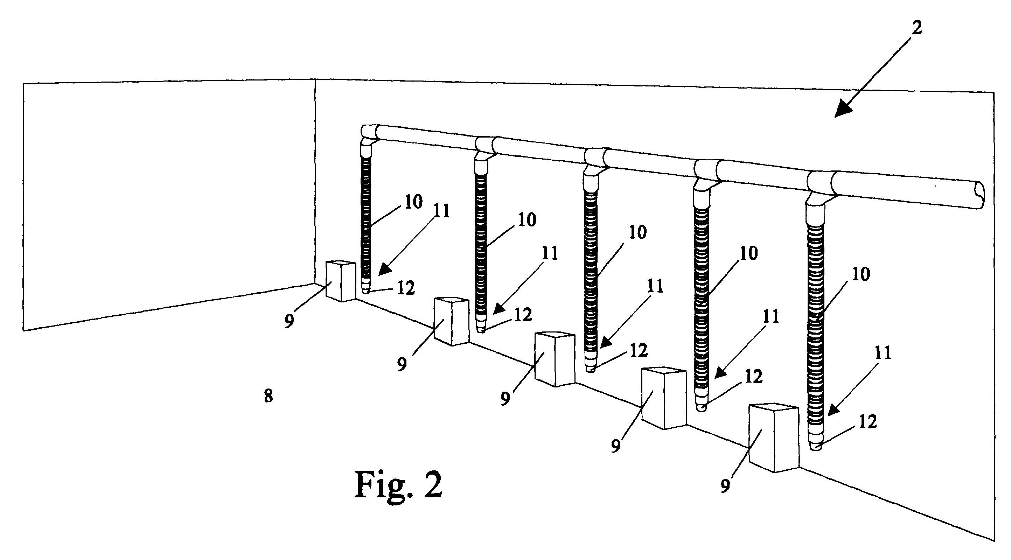

Fig. 2 shows the possible lay-out of an area 8 used for charging the batteries 1, where the number of battery chargers 9 corresponds to the number of batteries 1 for which the area 8 is designed.

The suction plant 2 which is associated with this area has a plurality of flexible connecting pipes 10, each of which is provided at its free end 11 with a suction mouth 12 which can be associated with a corresponding battery 1.

For this purpose, each battery 1 has, operationally associated with it, a connection device 13 which is able to connect in a removable manner the corresponding suction mouth 12 to a through-hole 14 formed on the closing lid 5 of the box container 4 (see Fig. 8).

The plant 2 is provided with one or more ventilators 15 which are designed to expel outside the area 8 the gas sucked in by the suction mouths 12.

Advantageously, as can be seen in Fig. 1, the ventilator 15 is arranged outside the area 8 so that all the pipes 10 inside the area are subject to a negative pressure during operation of the suction plant 2. Obviously the ventilator 15 of each specific gas disposal unit will have dimensions depending on the maximum number of batteries 1 to which the suction plant 2 is connected.

The air flow sucked through each hole 14 by said suction plant 2 draws, through the openings 25 formed on the corresponding box containers 4, quantities of air which are sufficient to satisfy the safety regulations relating to the ventilation of premises used for charging batteries 1, thus allowing the installation, inside them, of any industrial plant or machinery.

In other words, connecting the suction plant 2 directly to the box containers 4 of the batteries 1 produces an air flow which envelops the batteries 1 so as to ensure a concentration of hydrogen outside the boxes 4 which is well below the lower explosion-risk limit and therefore allow the simultaneous presence of the charging batteries 1 with any type of industrial plant or machinery.

The closing lid 5 therefore acts as a suction hood which is able to convey into the pipe 10 all the gases emitted by the battery 1 during charging thereof.

In one possible embodiment of the present invention, the openings 25 may be obtained by means of partial raising, into a raised position 30, of the closing lid 5 from the box container 4.

Advantageously the closing lid 5 may be kept in this raised position 30 by means of a raising arm 16 which is connected to the bodywork of the electric truck 3 or to the body of the box container 4 (see Fig. 8).

The connection device 13 mentioned above is essentially composed of a first annular fastening element 17 and a second annular fastening element 18. These elements 7 and 18 are internally hollow, the first one 17 being fixed to the hole 14 on top of the closing lid 5 and the second one 18 to the suction mouth 12 at the end 11 of the connecting pipe 10, respectively.

These two fastening elements 17 and 18 may be removably joined together by means of mutual engagement so as to allow the connecting pipe 10 to draw from inside the box container 4 through the closing lid 5.

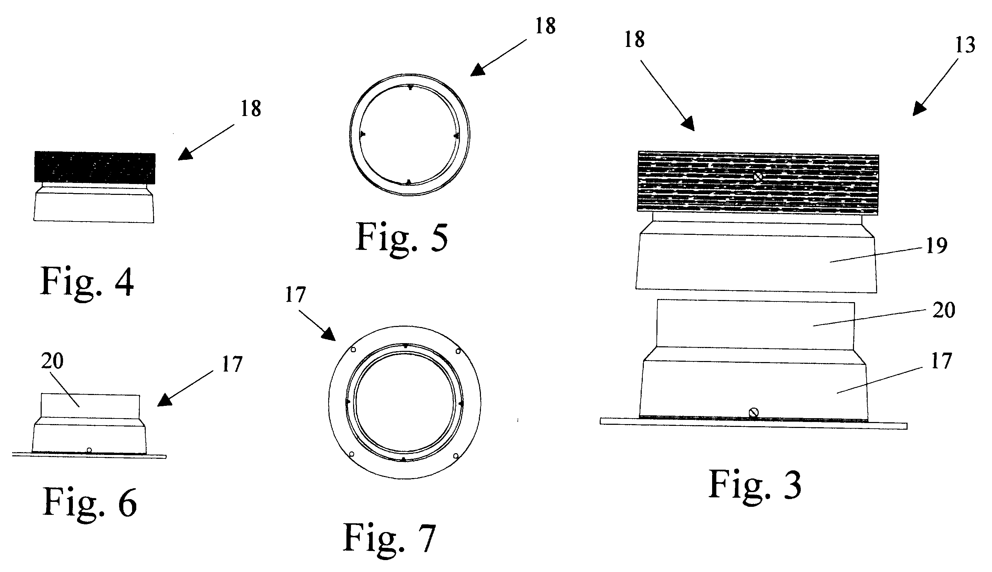

As can be seen in Figures 3 to 7, the second fastening element 18 has a substantially frustoconical portion 19 inside which a corresponding cylindrical portion 20 of the first fastening element 17 may be removably engaged.

It should be noted that the gas disposal unit according to the present invention allows localised suction of the gases in all the zones which are equipped with battery chargers 9 and can be reached by the pipes 10.

Therefore, for example if an extensive and ramified suction plant 2 is provided, it is possible to perform charging of the batteries 1 in the vicinity of all the areas of industrial warehouses where transportation trucks are used.

For safety reasons it is convenient to make operation of the battery chargers 9 dependent upon operation of the suction plant 2.

Moreover, for safety reasons, it is possible to envisage automatic interruption of the electric power supply to the battery chargers 9 when there is a fault in the suction plant 2. This may be achieved, for example, by means of activation of a flow switch set to a minimum value for the air flow of the connecting pipe 10.

## Claims

1. Gas disposal unit for charging power batteries of the type arranged inside a box-type container (4) provided with a closing lid (5) and arranged in a rear compartment of an electric truck (3), characterized in that it comprises: a suction plant (2) associated with at least one area (8) used for charging power batteries (1) and provided with at least one connecting pipe (10) equipped with a suction mouth (12) and ventilation means (15) designed to expel the gas sucked by said mouth (12) outside the area (8); at least one connection device (13) designed to removably connect said suction mouth (12) to a through-hole (14) formed on said closing lid (5) so as to allow suction of the gases produced inside the batteries (1) during charging thereof.

2. Disposal unit according to Claim 1, characterized in that the air flow sucked through said hole (14) by said suction plant (2) draws, through the openings (25) formed on said box container (4), a quantity of air sufficient to comply with the safety standards relating to the ventilation of premises used for the charging of batteries (1), thus allowing installation, inside them, of any industrial plant or machinery.

3. Disposal unit according to Claim 2, characterized in that said openings (25) are obtained by means of partial raising of the closing lid (5) into a raised position (30).

4. Disposal unit according to Claim 3, characterized in that said closing lid (5) is kept in said raised position (30) by a raising arm (16) mounted on said box container (4).

5. Disposal unit according to Claim 3, characterized in that said closing lid (5) is kept in said raised position (30) by a raising arm (16) mounted on the bodywork of said electric truck (3).

6. Disposal unit according to Claim 3, characterized in that said closing lid (5) forms an integral part of the bodywork of said electric truck (3).

7. Disposal unit according to Claim 1, characterized in that said closing lid (5) acts as a localised suction hood for said suction plant (2) so as to convey into the connecting pipe (10) all the gases emitted by the battery (1) during charging thereof.

8. Disposal unit according to Claim 1, characterized in that said connecting pipe (10) consists of at least one flexible section.

9. Disposal unit according to Claim 1, characterized in that said suction plant (2) comprises a plurality of connecting pipes (10) provided with corresponding suction mouths (12) which can be connected by means of said connection devices (13) to a corresponding number of batteries (1).

10. Disposal unit according to Claim 1, characterized in that the operation of the battery chargers (9) required for charging said batteries (1) is dependent upon operation of the suction plant (2).

11. Disposal unit according to Claim 1, characterized in that said connection device (13) comprises a first and a second annular fastening element (17, 18) which are internally hollow and fixed respectively to said hole (14) of said closing lid (5) and to said suction mouth (12) on said connecting pipe (10), said first and said second fastening element (17, 18) being able to be removably joined together by means of mutual engagement so as to allow said connecting pipe (10) to draw from inside said box container (4) through said closing lid (5).

12. Disposal unit according to Claim 1, characterized in that said second fastening element (18) has a substantially frustoconical portion (19) inside which a corresponding cylindrical portion (20) of said first fastening element (17) is removably engaged.

13. Disposal unit according to Claim 1, characterized in that it may be operationally associated in an easy manner with any electric truck (3) by forming a through-hole (14) on the closing lid (5) of the latter and connecting it by means of said connection device (4) to said connecting pipe (10).
